# EUROPEAN PATENT APPLICATION

(11) **EP 1 508 975 A1**
(43) Date of publication of application: **23.02.2005**
(21) Application number: 03292041.5
(22) Date of filing: 18.08.2003
(51) Int. Cl.: H04B 1/52, H04B 1/12

(54) **Radio frequency device using circulator and echo canceller for cancelling transmission leakage signal in the reception chain**

(71) Applicant: ALCATEL, 75008 Paris (FR)
(72) Inventor: Alberi-Morel, Marie Line, 94230 Cachan (FR); Edimo, Marc, 91940 Les Ulis (FR); Maillard, Hervé, 91420 Igny (FR); Lestable, Thierry, 75015 Paris (FR); Coupechoux, Marceau, 75005 Paris (FR)
(74) Representative: Brose, Gerhard

(57) **Abstract**

The present invention concerns the radio frequency device forming an air interface comprising a single antenna for receiving and transmitting simultaneously on the same frequency channel both up-link and down-link data streams of a digital radio telecommunication equipment, and a circulator for routing the up-link data streams from the antenna to an up-link chain with at least a receiver unit and the down-link data streams from a down-link chain with at least a sender unit to the antenna.

Said device (1) characterised in that it also comprises a digital signal processing unit (6) in the up-link chain (4), which is able to decode the up-link data streams by processing the corresponding up-link data signal by taking into account the interference provoked by at least a part of the down-link data signal.

## Description

The present invention concerns the field of the radio frequency RF communications, in particular with simultaneous transmission Tx and reception Rx through the same antenna and over the same channel.

Simultaneous Tx/Rx communication from the same antenna with a low Tx/Rx coupling is a common practice in radar systems thanks to sophisticated circulator devices. But this involves expensive heavyweight and cumbersome RF equipment. While comprising a single antenna, this RF device must allow Transmission and Reception Tx/Rx simultaneously, with minor performance degradation (i.e. low Tx/Rx coupling, thus low interference level).

Moreover, low costs and lightweight printed circuits of circulators of the present state of the art show high level Tx/Rx coupling when performing simultaneous Tx/Rx with the same antenna. Thus, these circulators, whereas cheap, are unsuitable for performing the above mentioned type of communication.

So, the general technical problem to be solved by the invention is to propose a low cost and efficient RF device which provides in particular the ability to implement a Code Division Duplexing CDD of Up-Link UL and Down-Link DL digital communications over an air interface, with a single antenna, and with low Tx/Rx coupling, thus low interference level.

Therefore, the present invention concerns a radio frequency device forming an air interface comprising a single antenna for receiving and transmitting simultaneously on the same frequency channel, for example by means of Code Division Duplexing, both up-link and down-link data streams of a digital radio telecommunication equipment, and a circulator for routing the up-link data streams from the antenna to an up-link chain with at least a receiver unit and the down-link data streams from a down-link chain with at least a sender unit to the antenna, device characterised in that it also comprises a digital signal processing unit in the up-link chain, which is able to decode the up-link data streams by processing the corresponding up-link data signal by taking into account the interference provoked by at least a part of the down-link data signal.

As can be noticed, the basic idea of the inventive solution is to combine a light weight low cost circulator with a baseband digital signal processing unit at the reception side. This solution conveniently mitigates Tx/Rx coupling (respectively the interference level) for a reliable reception. The cost of the used circulator is lowered by moving the complexity of the reception from this analogical device to the digital signal processing unit.

Advantageously, the digital signal processing unit uses as an entry parameter or control data for the processing of the up-link data signal and compensation of the interference, the down-link data signal transmitted simultaneously with said up-link data signal.

In a most preferred implementation of the invention, the up-link data streams are coded with orthogonal or low cross-correlated pseudo-noise codes and the digital radio telecommunication is based on code division duplexing of up-link and down-link communications.

According to a first embodiment of the invention, ensuring low equipment requirement and minimal costs, the digital signal processing unit consists of a baseband digital signal processing module performing multi-user detection (MUD) and processing the up-link data signal using as a control data the down-link data signal.

According to a second embodiment of the invention, ensuring optimum uncoupling between UL and DL, the digital signal processing unit is comprised of a digital echo canceller, fed with the down-link data signal and whose exit signal is substracted from the up-link data signal in order to produce a corrected up-link data signal, and of a baseband digital signal processing module processing the corrected up-link data signal issued by the digital echo canceller and using as a control data the down-link data signal.

Preferably, the digital signal processing module performs multi-user detection MUD.

Indeed existing CDMA systems (like IS-95) include limited signal processing and interference suppression, namely, the single-user match filter or Rake receiver, which treats interference from other users as noise. However, it was observed that joint, optimal, maximum likelihood decoding of all users (MUD) has significant performance benefits compared to the single-user matched filter. In particular, multiuser detectors are very robust to near-far effect (From "Adaptative Technique for Multiuser CDMA Receivers" - M. Honig and M. K. Tsatsanis in IEEE Signal Processing Magazine - May 2000).

It should be noticed that the end goal of an echo canceller is to remove from the up-link data signal any residual echo signal caused by impedance mismatches at the circulator. Indeed, due to the circulator low complexity a part of the down-link data signal returns in the up-link chain (reception side). To eliminate the residual echo signal, the echo canceller models the returning echo knowing the down-link data signal and cancels the residual echo signal by subtracting it from the up-link data signal.

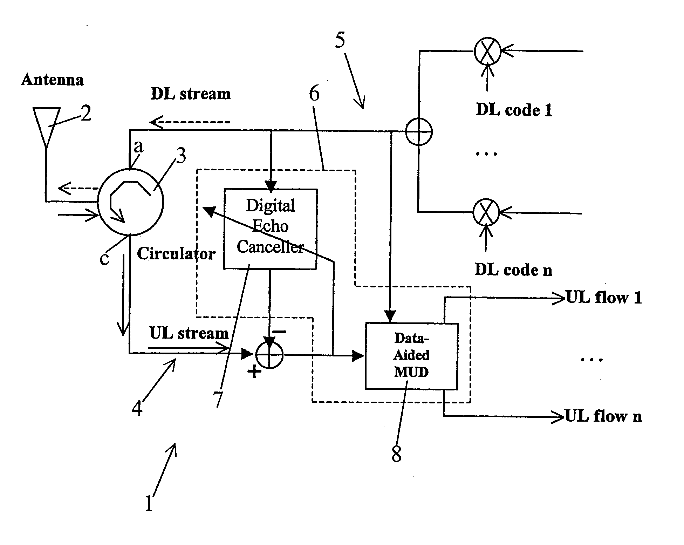

The invention will be better understood thanks to the following more detailed description of a non limitative embodiment of the invention, based on the enclosed figure representing schematically an inventive radio frequency device.

As can be seen on the figure, the RF device 1 is shown as being integrated in a communicating mode.

Said RF device 1 is made of a single antenna 2, a circulator 3, a down-link chain 5 (transmission side) and an up-link chain 4 (reception side) with a digital baseband signal processing unit 6.

The single antenna 2 received and transmits simultaneously in the same frequency channel the UL (up-link) and the DL (down-link) data streams. The circulator 3 is a common microwave circuit module. Its main function is to "route" the DL streams from the sender or transmission part connected to the port (a) of this circulator 3 to the antenna 2 while maintaining a low (ideally a null) Tx/Rx coupling level to its third port (c) which is connected to the receiver part. Conversely, the UL data stream which is coming from the antenna 2, is transmitted (via this circulator 3) to the receiver part while maintaining a low (ideally null) Tx/Rx coupling level at the transmitter part connected to the port (a) of the later circulator 3. In practice, even when the circulator is strictly designed, a certain amount of DL signal is always interfering the UL signal.

However, in the receiver part or chain 4, a digital signal processing unit 6, comprising a module 8, is able to decode several up-link streams coded with orthogonal codes or low cross-correlated pseudo-noise codes, and to take into account the aforementioned interference of the DL signal. It can take advantage of the known transmitted signal (dotted line on the drawing). The digital signal processing DSP module or processer 8 can perform the MUD mechanism (blind or not) aided by a digital echo canceller 7.

The possibility of simultaneously transmitting and receiving information flows depends on the signal to interference ratio SIR between the received signal and the transmitted signal. Moreover, the achievable SIR will determine the transmission range of the device 1.

Nowadays, Direct Sequence Spread Spectrum DSSS receivers with a RAKE receiver are already able to capture a signal if the interferer signal is 10dB below. The device 1 of the invention comprises advantageously three components to reduce the interference due to the transmitted signal: a circulator 3, an echo canceller 7 and a data-aided MUD performing module 8. Each of them contributes to the reduction, e.g., the circulator 3 gives a reduction of 20/25dB. If it is assumed that the actual state-of-the-art allows a reduction of XdB of the transmitted signal power (Pt in dB), then the received power (Pr in dB) and thus the transmission range is fixed by the required SIR (in dB): Pr - (Pt - X) > SIR. If the technology improves X, the transmission range can be extended.

Another point to be considered is the impact of noise on the performance of the device 1.

In the transmission branch or chain 5, the transmitted signal is amplified before the circulator 3. Then, a part of this amplified signal interferes in the receiving branch or chain 4. As this signal is analog, it carries also noise.

However, this noise plays a small role. Indeed, at the end of the transmission chain 5, i.e., after the amplifier (not shown), its level is very low, i.e., about - 101 dBm. This level will be further reduced after the circulator 3.

Thus, the noise that comes from the transmission branch has no influence on the performance of the device 1.

The present invention also encompasses a method for performing a digital radio telecommunication based on code division duplexing of up-link and down-link communications, using a radio frequency device 1 as described before, wherein the digital signal processing unit 6 is decoding the up-link data streams, by processing the corresponding up-link data signal by taking into account the interference provoked by at least a part of the down-link data signal.

Thanks to the invention, there is proposed a radio frequency device which is lightweigh and unexpensive and enables CDD communication.

The present invention is, of course, not limited to the preferred embodiment described and represented herein, changes can be made or equivalents used without departing from the scope of the invention.

## Claims

1. Radio frequency device comprising a single antenna for receiving and transmitting simultaneously on the same frequency channel, for example by means of Code Division Duplexing, both up-link and down-link data streams of a digital radio telecommunication equipment, and a circulator for routing the up-link data streams from the antenna to an up-link chain with at least a receiver unit and the down-link data streams from a down-link chain with at least a sender unit to the antenna, device (1) **characterised in that** it also comprises a digital signal processing unit (6) in the up-link chain (4), which is able to decode the up-link data streams by processing the corresponding up-link data signal by taking into account the interference provoked by at least a part of the down-link data signal.

2. Radio frequency device of claim 1, **characterised in that** the digital signal processing unit (6) uses as an entry parameter or control data for the processing of the up-link data signal and compensation of the interference, the down-link data signal transmitted simultaneously with said up-link data signal.

3. Radio frequency device according to anyone of claims 1 and 2, **characterised in that** the up-link data streams are coded with orthogonal or low cross-correlated pseudo-noise codes.

4. Radio frequency device according to anyone of claims 1 to 3, **characterised in that** the digital signal processing unit (6) consists of a baseband digital signal processing module (8) performing multi-user detection (MUD) and processing the up-link data signal using as a control data the down-link data signal.

5. Radio frequency device according to anyone of claims 1 to 3, **characterised in that** the digital signal processing unit (6) is comprised of a digital echo canceller (7), fed with the down-link data signal and whose exit signal is substracted from the up-link data signal in order to produce a corrected up-link data signal, and of a baseband digital signal processing module (8) processing the corrected up-link data signal issued by the digital echo canceller (7) and using as a control data the down-link data signal.

6. Radio frequency device according to claim 5, **characterised in that** the digital signal processing module (8) performs multi-user detection (MUD).

7. Method for performing a digital radio telecommunication based on code division duplexing of up-link and down-link communications, using a radio frequency device (1) according to anyone of claims 1 to 6, wherein the digital signal processing unit (6) is decoding the up-link data streams, by processing the corresponding up-link data signal by taking into account the interference provoked by at least a part of the down-link data signal.
